# EUROPEAN PATENT APPLICATION

(11) **EP 4 733 340 A1**
(43) Date of publication of application: **29.04.2026**
(21) Application number: 24711264.2
(22) Date of filing: 19.01.2024
(51) Int. Cl.: C08G 18/10, C08G 18/30, C08G 18/76

(54) **BINDING GEL FOR CORK POWDER, METHODS AND PRODUCTS**

(30) Priority: 20.06.2023 PT 2023118733
(71) Applicant: Flexpur - Polimeros de Poliuretano S A, 3880-327 Ovar (PT)
(72) Inventor: RODRIGUES PEREIRA, Carlos Manuel, 3880-327 OVAR (PT); LEITE AMARAL, Jorge Manuel, 3880-327 OVAR (PT); PEREIRA ARAÚJO, Ruben Alexandre, 3880-327 OVAR (PT); POÇAS ARAÚJO DE OLIVEIRA, Tiago Manuel, 3880-327 OVAR (PT)
(74) Representative: Patentree
(86) International application number: PCT/IB2024/050529
(87) International publication number: WO 2024/261538

(57) **Abstract**

The present invention relates to a cork powder binding gel, a method for producing an expanded cork powder granule using said binder and the expanded cork powder granule obtained by such method. Furthermore, the present invention also relates to articles or compositions comprising the expanded cork powder granule, namely stoppers.

## Description

### TECHNICAL FIELD

The present invention concerns a cork powder binding gel, a method for producing an expanded cork powder granule using said binder and the expanded cork powder granule obtained by such method. Furthermore, the present invention also concerns to products comprising said expanded cork powder granule, namely cork stoppers and articles.

### BACKGROUND

The cork industry has cork as its central raw material, with reproduction or amadia cork (cork obtained from the third stripping and with sufficient thickness to produce stoppers) being the most used in the industrial production of stoppers and other products derived from natural cork. The processing of these materials produces large amounts of waste, such as bark chippings, chunks and scraps of lower quality cork. Since raw material waste amounts to around 85% wt/wt, its use in other industries or materials is extremely important. Thus, this waste is frequently used in the production of chipboards for different purposes: discs, covering plates, fixing and decorative panels, insoles, among others. However, approximately 25% wt/wt of the initial cork is obtained with very low granulometries, resulting from the different stages of its processing. This fraction is called cork powder (Cordeiro, Nereida Maria Abano (1998). "Fracionamento da Cortiça e Caracterização dos seus Componentes. Estudo de Possibilidades de Valorização da Suberina". PhD Thesis, University of Aveiro).

Cork powder is defined as the fraction with a granulometry of less than 0.25 mm, according to the NP-114 and NP ISO 633 2011 standards.

Cork powder originates from different stages of cork processing:
- A: Crushing powder - powder originated in the initial stage of granulation operations, composed of several phases (pre-crushing and drying) before cleaning and separation operations;
- B: Cleaning powder - powder obtained in the following stage involving separation - cleaning the back and belly of cork and other impurities;
- C: Powder from granulometric separations - powder produced in the final granulation stage, in the separation of granulates by different granulometry;
- D: Powder from the finishes of slab-cork panels - Obtained from laminating, sanding and cutting operations of slab-cork panels;
- E: Powder from the finishes of cork stoppers and discs - Originated in sanding, rounding, chamfering and thickness adjustment operations;
- F: Powder from the finishes of natural cork stoppers - Originated in sanding, rounding and chamfering operations. (Gil, Luis & santos, J. & Florêncio, M.I. (1986). "Identificação e caracterização de vários tipos de pó obtidos no processamento industrial da cortica". Boletim IPF-Cortiça. 255-261.)

Cork powder appears as the main waste of the cork industry, with low commercial value, which causes this surplus to be used in the production of energy through its combustion, which is not a very profitable use. Cork powder represented around 50 000 tons per year in 1997 and is estimated to have increased, meaning that its valorisation represents a high industrial interest (Luís Gil, Cork powder waste: An overview, Biomass and Bioenergy, Volume 13, Issues 1-2, 1997, Pages 59-61).

The use of cork powder to produce stoppers would be extremely useful. In addition to allowing the valorisation of this waste, it would significantly increase the raw material available for the production of stoppers, whose market is growing and that could jeopardize the sustainability of the use of cork as a raw material.

However, the properties of cork powder do not allow its direct use in the production of stoppers, since its reduced granulometry does not allow obtaining a stopper with the appropriate physical properties, namely in terms of density, compressibility index, torsion and absorption.

Document WO9900230A1 describes a process for manufacturing a composition usable in the production of stoppers, a composition and a stopper comprising that composition. However, this document does not mention how cork powder can be used to produce stoppers with adequate quality.

Document PT110453A describes a method for preparing and optimizing cork powder, for its use in removing undesirable aroma compounds present in the beverage's matrix. No methods are described or explored that allow the use of cork powder in the production of stoppers with the desired quality.

Document WO2008114103A1 describes a particle agglomeration process for the wood and cork industrial sectors, where a method is mentioned that allows the agglomeration of cork powder. However, the agglomerate obtained does not have the necessary properties to be incorporated into the production of stoppers, since the process used only agglomerates cork powder particles without any intermediate treatment. In this way, the agglomerated product obtained does not allow obtaining stoppers with the necessary characteristics, particularly in terms of density and impermeability.

These facts are described in order to illustrate the technical problem solved by the embodiments of the present document.

### GENERAL DESCRIPTION

Surprisingly, the inventors of the present invention discovered a method that allows obtaining an expanded cork powder granule with the appropriate properties so that it can be used in the production of stoppers.

The expanded cork powder granule of the present invention comprises a plurality of cork powder particles bound by polyurethane foam (microcellular polyurethane foam), wherein such foam results from the cork powder binding gel of the present invention.

In an embodiment, the present invention relates to a method of obtaining expanded cork powder granules that comprises the steps of dispersing a microcellular polyurethane foam while it is in the liquid (gel) phase in cork powder, and further relates to the development of a microcellular polyurethane foam with cells resistant to pressure and temperature so that the expanded granule (microcellular foam + cork powder) can be used in the production process of agglomerated stoppers with suitable properties, and can also be approved for food contact.

One aspect of the present disclosure relates to a cork powder binding gel which comprises:
80-99% (wt/wt_{gel}) of at least one polyurethane prepolymer comprising 0.5-10% (wt/wt_{gel}) of isocyanate groups and 0.05 - 5% (wt/wt_{gel}) of free isocyanate monomers;
0.1-5% (wt/wt_{gel}) of at least one surfactant agent for the production of microcellular foams;
wherein the surfactant agent is selected from a list consisting of: silicone; polysiloxane.

In an embodiment, the gel comprises 0.5-2% (wt/wt) of at least one surfactant agent; preferably 0.5-1.5% (wt/wt).

In a preferred embodiment, the gel is suitable for contact with food products.

In an embodiment, the surfactant agent is selected from a list consisting of: polyethersiloxane, polyethersiloxane comprising alkoxysilyl groups, polysiloxane polyether, silicone-polyether copolymer, linear polydimethylsiloxane-polyether copolymer, polyether-modified polysiloxane, or mixtures thereof.

In a preferred embodiment, the surfactant agent is a polyether-modified polysiloxane.

In an embodiment, the surfactant agent is a polyethersiloxane comprising alkoxysilyl groups.

In a preferred embodiment, the surfactant agent is a polyethersiloxane comprising alkoxysilyl groups, such as the one described in patent EP2352779B1. Polyethersiloxanes are also known as silicone-polyether copolymers or simply silicone-polyethers.

In an embodiment, the surfactant agent is a polysiloxane polyether copolymer, such as the one described in patent EP2554574B1.

In an embodiment, the surfactant agent is a silicone-polyether copolymer, such as the one described in patent US8334355B2.

In an embodiment, the surfactant agent is a linear polydimethylsiloxane-polyether copolymer, such as the one described in patent US8957009B2.

In an embodiment, the polyurethane prepolymer comprises 0.1 - 5% (wt/wt_{gel}) of free isocyanate monomers; preferably 0.1-1% (wt/wt_{gel}).

In an embodiment, the polyurethane prepolymer comprises linear and branched polyether polyols with a molar mass greater than 2000 g/mol, preferably with a molar mass ranging from 2000 - 10000 g/mol; more preferably ranging from 2000 - 5000 g/mol.

In an embodiment, the polyurethane prepolymer comprises toluene diisocyanate (TDI); preferably 2,4-TDI and/or 2,6-TDI.

Another aspect of the present disclosure relates to a polyurethane post-foaming gel which comprises 80-99% (wt/wt_{gel}) of the gel described herein and 1-20% (wt/wt_{gel}) of water.

In an embodiment, said polyurethane post-foaming gel comprises a gel time of at least 360 seconds, preferably between 360-720 seconds; more preferably between 540 - 600 seconds.

In an embodiment, the viscosity of the polyurethane post-foaming gel ranges from 2000 - 10000 cP (centipoise) cP, at 25 °C.

Viscosity can be measured by different methods known in the state of the art. Unless specifically indicated in a particular embodiment, in the present disclosure the viscosity was measured using a Brookfield DV-II+Pro with an SC4-31 spindle at 3 rpm (revolutions per minute), in a beaker, with a diameter of 2 cm and volume of 18 ml, at a temperature of 25 °C.

Another aspect of the present disclosure relates to the use of the cork powder binding gel or post-foaming gel as a cork powder binding agent.

Another aspect of the present disclosure relates to an expanded cork powder granule which comprises a plurality of cork powder particles bound by the polyurethane post-foaming gel of the present invention. Preferably, the granulometry of the cork powder particles is less than 250 µm.

Another aspect of the present disclosure relates to an expanded cork powder granule which comprises a plurality of cork powder particles bound by the polyurethane foam resulting from the polyurethane post-foaming gel of the present invention. Preferably, the granulometry of the cork powder particles is less than 250 µm.

In an embodiment, the production of the expanded cork powder granules of the present invention can be carried out through wet granulation processes, preferably by spraying in a fluidized bed ("fluid bed granulation").

The granulometry/particle size measurement of the cork powder/expanded cork granule can be carried out in different ways. In this disclosure, the measurement of granulometry/particle size/expanded granule size was carried out based on the standard for granulometric analysis by mechanical sieving, namely the one described by NP ISO 2030:2020. In particular regarding the particle sizes obtained by the sieves specified in point 4.1.2, whose openings comply with the ISO/R 40/3 series (see ISO 565 of 1990).

In an embodiment, the density of the expanded granule is less than 0.5 g/cm³. Preferably it ranges from 0.10 - 0.37 g/cm³; more preferably it ranges from 0.10 - 0.25 g/cm³.

In an embodiment, the size/granulometry of the expanded granule is greater than 100 µm; preferably 300-600 µm.

Another aspect of the present disclosure relates to a composition comprising the expanded granule described herein, and to an article comprising such composition.

Another aspect of the present disclosure relates to a stopper comprising the expanded granule of the present invention. In a preferred embodiment, the stopper comprises 10 to 50% (wt/wt) of the expanded granule; more preferably 15 to 40% (wt/wt); even more preferably 20 to 30% (wt/wt).

Another aspect of the present disclosure relates to a method for producing said expanded granule, wherein the method comprises the following steps:
obtaining cork powder, wherein the size of the cork powder particles has a granulometry of less than 250 µm;
mixing the cork powder with 5 to 50% (wt_{gel/}wₜₒₜₐₗ) of the post-foaming gel;
resting the homogeneous mixture from the previous step in order to obtain an agglomerate of expanded cork powder granules comprising a plurality of cork powder particles bound by polyurethane foam;
breaking apart the agglomerate of expanded cork powder granules to obtain expanded cork powder granules.

The requirements for the storage silos of expanded cork powder granules are the same as those for storing granulated cork.

In an embodiment, the cork powder is selected from crushing powder, cleaning powder, granulometric separation powder, powder from the finishes of stoppers and agglomerate discs, powder from the finishes of natural cork stoppers, black cork powder, or mixtures thereof. In a preferred embodiment, the cork powder is selected from powder from the finishes of stoppers or crushing powder, or mixtures thereof.

In an embodiment, the step of breaking apart the agglomerate of expanded cork powder granules is carried out gently using a helical or dispersing propeller mixer (Cowles type); preferably at 200 rpm for 20 seconds.

Another aspect of the present disclosure relates to a method for producing the article or stopper described herein, comprising the following steps:
obtaining crushed cork;
obtaining expanded cork powder granules;
mixing 50-60 % (wt/wt) of the crushed cork, 20-30 % (wt/wt) of the expanded cork powder granules and 15-25 % (wt/wt) of a binding agent and 2-6 % (wt/wt) of water, until obtaining a homogeneous mixture;
compressing the mixture from the previous step to obtain the article or stopper, wherein the binding agent is a one-component (1K) or a two-component (2K) polyurethane prepolymer system, preferably one-component (1K) polyurethane prepolymer comprising 0.5-10% (wt/wt) of isocyanate groups and 0.05 - 5 % (wt/wt) of free isocyanate monomers.

In a preferred embodiment, the crushed cork comprises a particle size of 0.5-7.0 mm; preferably 0.5-1.0 mm.

In a preferred embodiment, the compressibility index of the stopper obtained ranges from 1500-2500 N.

In a preferred embodiment, the stopper obtained comprises a density ranging from 240-320 g/dm³; preferably 300 g/dm³, at 25 °C.

In a preferred embodiment, the method for producing the article or stopper comprises the use of additives and/or additional components, namely paraffinic oils, expandable microspheres, other release agents, among other components.

Unless otherwise indicated, all measurements, namely density and viscosity, were carried out at 25 °C and 1 atm.

### BRIEF DESCRIPTION OF THE DRAWINGS

For an easier understanding, the figures are herein attached, which represent preferred embodiments that are not intended to limit the object of the present description.
**Figure 1****:** Photograph of cork powder particles.
**Figure 2A** **and** **2B****:** Image of expanded cork powder granules obtained according to the method described in the present invention. The image was obtained with a microscope at 101 times magnification. (A): polyurethane microcellular foam and (B): cork powder.
**Figure 3****:** Microscopic image of a cross-section of the foam produced by the prepolymer + surfactant agent + water mixture.
**Figure 4****:** Photograph of the appearance of **(A):** cork powder, and the appearance of **(B):** expanded cork powder granule of the present invention.
**Figure 5****:** Photo of a stopper produced with 30% wt/wt_{(expanded} granule +microgranulated _{cork)} of the expanded cork powder granules of the present invention.
**Figure 6****:** Flowchart of the expanded cork powder granule production.
**Figure 7****:** Microscopic image of a stopper comprising the expanded cork powder granule of the present invention (300 times magnification). **(A):** microcellular polyurethane foam and **(B):** cork powder.
**Figure 8****:** Microscopic image of a stopper comprising the expanded cork powder granule of the present invention (500 times magnification). **(A):** microcellular polyurethane foam and **(B):** cork powder.
**Figure 9****:** Microscopic image of a stopper comprising cork powder at 300 times magnification.

### DETAILED DESCRIPTION

The present invention relates to a cork powder binding gel, to a method for producing an expanded cork powder granule using said binder and the expanded cork powder granule obtained by such method. Furthermore, the present invention also relates to articles or compositions comprising the expanded cork powder granule, namely stoppers.

The cork powder binding agent of the present invention allows the formation of cork granules of larger size and lower density, resistant to pressure and temperature, allowing their use in the production of cork stoppers.

Surprisingly, it was found that the cork powder binding gel of the present invention makes it possible to obtain expanded cork powder granules with better physical properties, with the produced stoppers that comprise 10 to 50 % wt/wt of the cork powder granule of the present invention showing the appropriate physical properties to be used as seals in the bottling of wines, champagnes, oils, cosmetics, among others.

In an embodiment, the present invention comprises the following steps:
- Developing a cork powder binding gel (microcellular polyurethane foam with a "gel" time sufficient to be able to disperse in the cork powder) which, after curing, produces expanded granules capable of resisting pressure and temperature without cell walls disrupting in the agglomerated stoppers production process;
- The microcellular polyurethane foam in the "gel" phase is dispersed in the cork powder in the form of microfragments of polyurethane foam gel enveloped by the cork powder;
- During mixing, the gel transforms into foam, which envelops the cork powder and forms an agglomerate of expanded granules comprising cork powder and polyurethane foam;
- Breaking apart the agglomerate of expanded granules to form expanded granules comprising cork powder and polyurethane foam.

In an embodiment, the present invention refers to the development of a microcellular polyurethane foam (resulting from the post-foaming gel) specific for this application, and to the technique of dispersing the microcellular polyurethane foam into small fragments (in gel phase) into the cork powder, creating an expanded granule of microcellular foam/cork powder composite that can be used in the production of agglomerated cork stoppers, as it has physical properties very similar to natural cork.

The chemistry of polyurethanes is essentially based on the reaction of the isocyanate functional group with components with hydroxyl groups (-OH), which results in the urethane group. Isocyanates are components that have one or more highly reactive groups (-N=C=O). Typically, these groups react quickly with components that have active hydrogen atoms, such as polyols, water, chain extenders, among others. (Marques, Gustavo André Castro Ferreira (2017). "Otimização do processo de produção de espumas flexiveis de poliuretano em bloco - comportamento térmico" (PhD thesis). Available at http://hdl.handle.net/10773/22844). A group of commonly used isocyanates are toluene diisocyanates (TDI), such as 2,4-TDI (formula I) and 2,6-TDI (formula II).

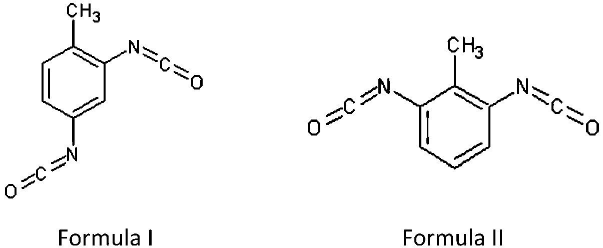

The polyurethane prepolymer is formed by the reaction between the diisocyanate and an oligo-polyol through bonding with the hydroxyl group. The final structure has endings with the -NCO groups. (Cabral, João Pedro Cristóvão (2013), "Preparação e caraterização dos resíduos de espumas de poliuretano do setor do calçado para reciclagem química", (Masters dissertation), available at http://hdl.handle.net/10198/9309).

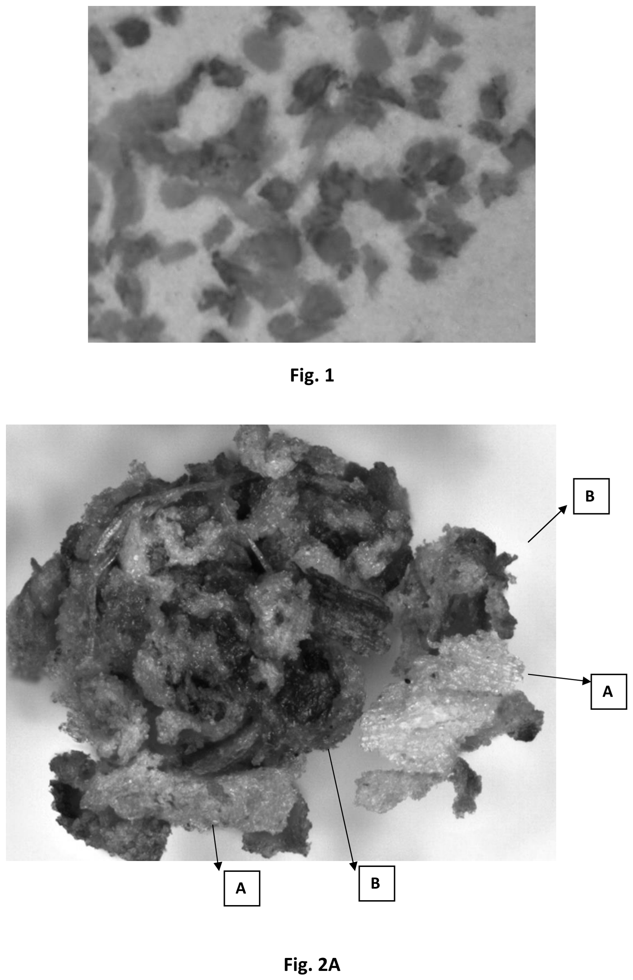

**Figure 1** shows cork powder particles resulting from sanding/cork stopper rectification.

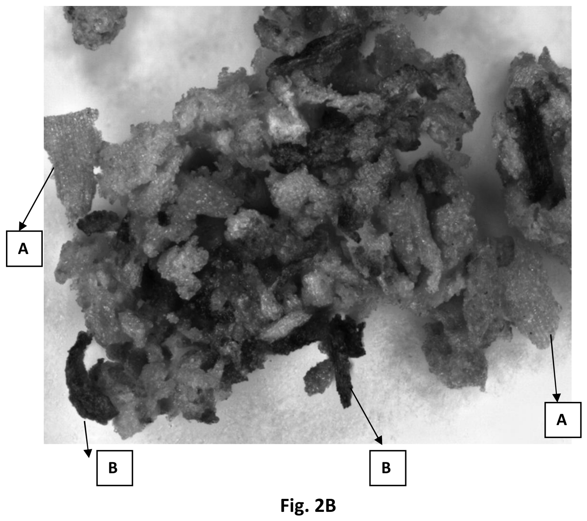

**Figure 2A** **and** **2B** show the expanded cork powder granule obtained according to the method of the present invention, using the cork powder binding gel described herein and cork powder resulting from the sanding/cork stopper rectification (light brown powder) and powder originating from cork crushing (black powder). The diameter of the expanded granule in the image is 1.5 mm. In the image, the lighter fragments **(A)** are microcellular foam and the darker fragments (B) are cork powder.

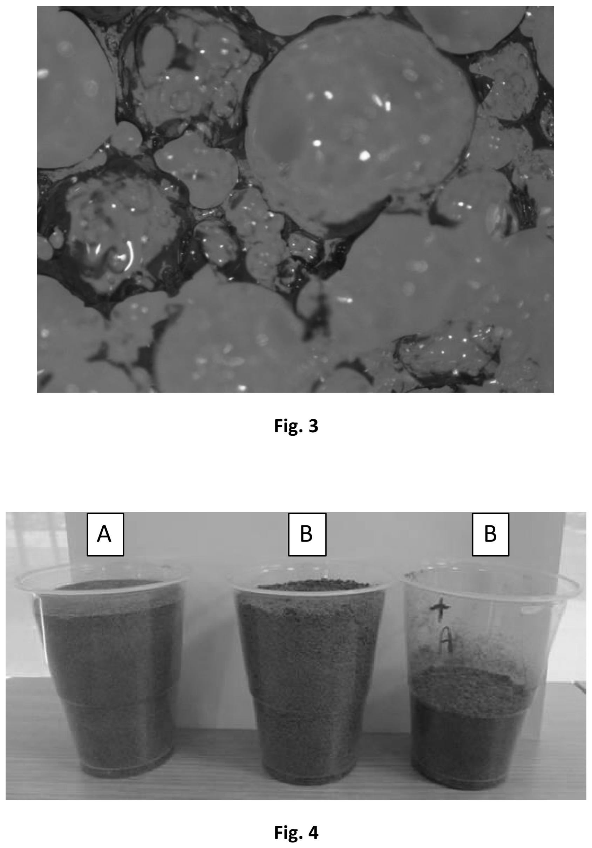

**Figure 3** shows a microscopic image of a cross-section of the foam produced by the pre-polymer + surfactant agent + water mixture. The image shows a foam with microcells (microbubbles) with an unbroken surrounding membrane (closed cell). The membrane that envelops the microbubbles must resist the pressure and temperature conditions in the agglomerated stoppers production process without disrupting.

**Figure 4** shows the visual comparison between cork powder (A) and expanded cork powder granules obtained according to the present invention (B). For the same mass placed in the container (50 grams), the lower density of expanded cork powder granules in relation to cork powder is visually confirmed.

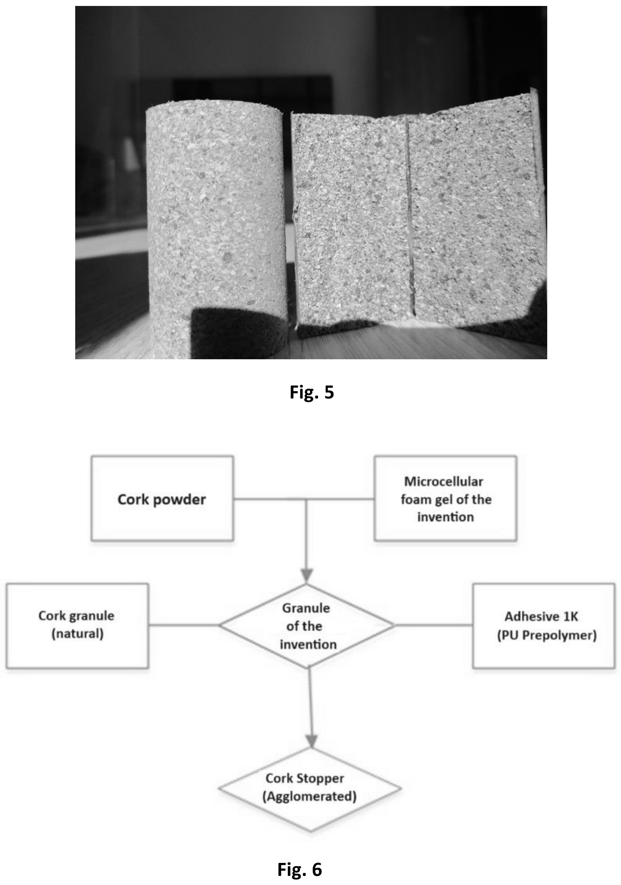

**Figure 5** shows an agglomerated stopper which comprises 30% (wt/wt) of expanded granules obtained according to the present invention.

**Figure 6** shows a flowchart of the production of the expanded cork powder granules of the present invention, and the obtention of stoppers comprising such expanded granules and crushed cork (natural cork granule).

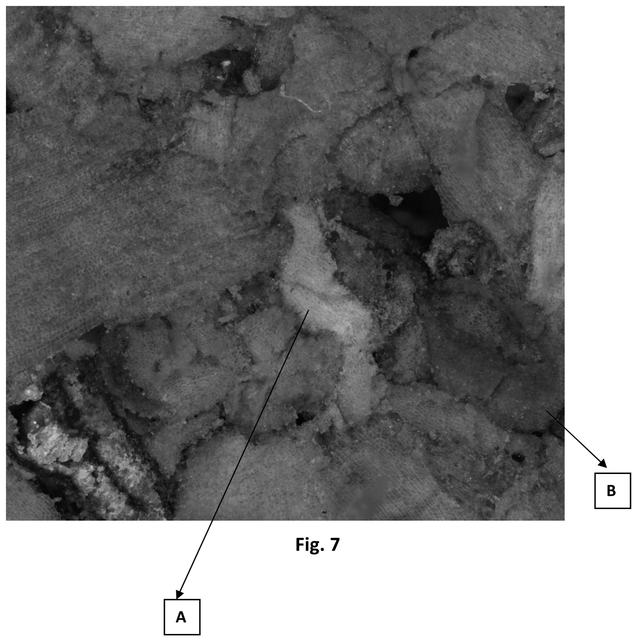

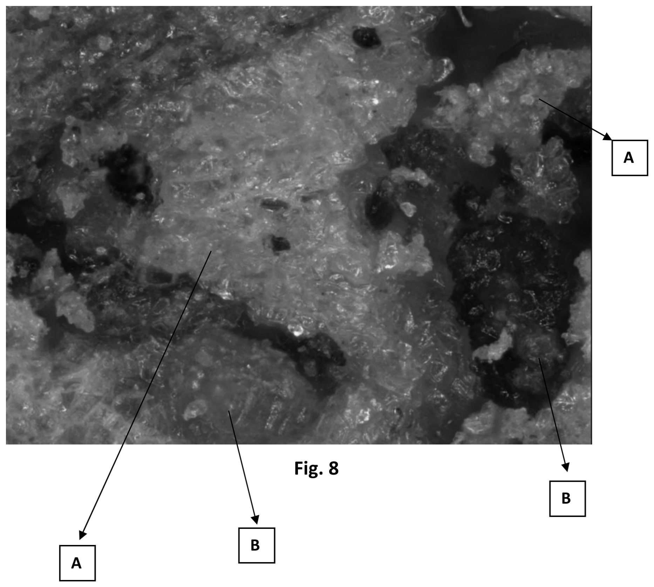

**Figure 7** and **Figure 8** show a microscopic image at 300 times and 500 times magnification, respectively, of a stopper comprising the expanded cork powder granule of the present invention and crushed cork. The image was obtained with the Zeiss Smartzoom Optical microscope.

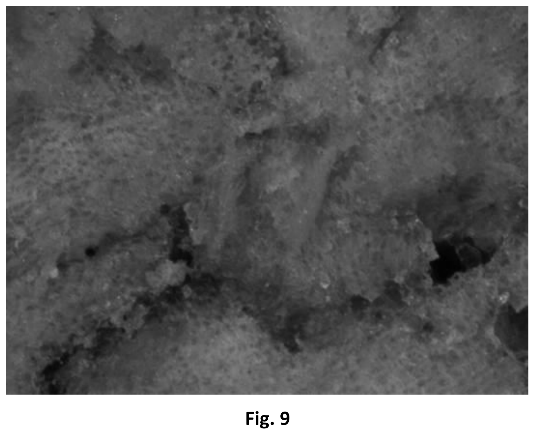

**Figure 9** shows a microscopic image of a stopper obtained according to comparative example 1 (described in Table 3), in which the white fragments of the microcellular polyurethane foam are not observed. By analysing figures **7-9** it can be seen that it is possible to identify the stoppers that comprise the expanded granule of the present invention. It is verified, preferably using a microscopic image, that in the stopper that comprises the expanded granule of the present invention, particles of cork powder bound by polyurethane foam are identified, as evidenced in Figures **7-8****.**

In an embodiment, the amount of post-foaming gel used to obtain the expanded granule of the present invention varies between 5% - 50% wt/wt compared to the mass of cork powder.

In an embodiment, the time for mixing the post-foaming gel into the cork powder varies between 1-15 minutes at a temperature of 15-30 °C in a helical or dispersing propeller crusher/disperser (Cowles type), preferably in a "Cowles" type mixer, preferably at 1000 rpm for a good dispersion of the post-foaming gel in the cork powder. After curing (resting and stabilizing) this mixture, the post-foaming gel is already completely transformed into polyurethane foam, giving rise to an aggregate of expanded cork powder granules, wherein said expanded granule comprises a plurality of cork powder particles bound by the polyurethane foam. This agglomerate is then broken apart, preferably in a helical or dispersing propeller crusher/disperser (Cowles type), more preferably in a "Cowles" type mixer, preferably at 200 rpm to form small expanded cork powder granules (granules which comprise cork powder and polyurethane foam).

Stoppers produced with a mixture of crushed/microgranulated natural cork with granule size between 0.5-7.0 mm, preferably of 0.5-1.0 mm and expanded cork powder granules obtained according to the present invention in an incorporation percentage of 10% - 50% wt/wt, do not present significant differences in physical properties compared to stoppers produced with 100% wt/wt of crushed/microgranulated natural cork.

The "Cowles" type mixer is a mixer that allows mixing and crushing mixtures of substances. It is a vertical agitator that comprises a bar and at one end comprises a disc, called a "Cowles disc", which disc comprises saw teeth, and which allows the mixing and crushing of substances or compositions.

The chemicals used to produce agglomerated stoppers must be approved for food contact and certified by accredited bodies. There are several commercially available polyurethane prepolymers that can be used to form the binding gel of the present invention. Preferably, the polyurethane prepolymer comprised in the binding gel of the present invention has the following characteristics of **Table 1:**

**Table 1. Characteristics of the polyurethane prepolymer.**

| **Property** | **Range** |
|---|---|
| Viscosity ¹ | 2000 - 10000 cP (centipoise) |
| Isocyanate percentage (NCO%) (wt/wtₜₒₜₐₗ) ² | 0.5%-10% |
| Density (g/cm^{3) 3} | 1.0-1.2 |
| Time in the gel phase (Gel-Time) (min) | 6-12 |
| Time for complete polymerization (Tack-Free) (hours) | 2:00 - 24:00 |

| | |
|---|---|
| ¹ Viscosity was determined using the NP ISO 2884 method, Brookfield equipment, at 25 °C. ² The content of isocyanate groups (NCO) was determined using the Titration method (ASTM D 2572) 3 Density was determined using a Pycnometer at 25 °C. | |

In an embodiment, the polyurethane prepolymer used to obtain the post-foaming gel is obtained from aromatic isocyanates such as Toluene Diisocyanate (TDI) and Diphenylmethane Diisocyanate (MDI) and/or aliphatic isocyanates such as Isophorone Diisocyanate (IPDI) and Hexamethylene Diisocyanate (HDI) and polyether polyols based on ethylene oxide, propylene oxide or tetrahydrofuran (THF), polyester polyols obtained by the polycondensation of dicarboxylic acids and dialcohols or by polymerization of cyclic esters (lactones or carbonates), polycarbonate polyols, polybutadiene polyols and vegetable-based polyols.

In an embodiment, the polyurethane prepolymer used to obtain the binding gel of the present invention is obtained from the reaction between polyols and toluene diisocyanate (TDI). It is presented as a transparent, colourless or slightly yellowish liquid with no suspended materials.

The following **Table 2** summarizes the physical characteristics of examples A and B of polyurethane prepolymer used to obtain the binding gel of the present invention.

**Table 2. Physical characteristics of examples A and B.**

| **Product** | **Prepolymer - Example A** | **Prepolymer - Example B** |
|---|---|---|
| Viscosity at 25 °C [cP] ¹ | 5500 | 8000 |
| NCO content [%] ² | 3.6 | 2.8 |
| Free TDI content [%] ³ | 2 | < 1.0 |
| Density [g.cm⁻³] ⁴ | 1.065 | 1.060 |
| Solids content [%] ⁵ | > 98 | > 99 |

| | | |
|---|---|---|
| ¹Viscosity was determined using the NP ISO 2884 method, Brookfield equipment, at 25 °C. ² The content of isocyanate groups (NCO) was determined using the Titration method (ASTM D 2572) ³ The free isocyanate content (free TDI) was determined using the HPLC method (ASTM D 5155). ⁴ Density was determined using the JQL PUR 005 method (DIN EN 542) at 25 °C. ⁵ The solids content was determined using the JQL PUR 004 method (ISO 3251) | | |

In an embodiment, the polyurethane prepolymer used has a viscosity between 2000 - 10000 cP (centipoise) at 25 °C and a percentage of isocyanate groups (NCO %) between 0.5%-10%.

In an embodiment, the polyurethane prepolymers of examples A and B are produced by the reaction of linear and branched polyether polyols of molar masses between 2000-10000 g/mol; preferably between 2000 - 5000 g/mol; and Toluene Diisocyanate (TDI) with different compositions regarding the 2,4-TDI and 2,6-TDI isomers.

In an embodiment, the post-foaming gel of the present invention is produced by mixing a polyurethane prepolymer with a surfactant agent and water.

In an embodiment, the polyurethane prepolymer used to obtain the cork powder binding gel of the present invention is selected from the commercial products Flexpur^{®} 220, Flexpur^{®} 240, Flexpur^{®} 280A, Flexpur^{®} 240D and Flexpur^{®} 160, preferably Flexpur^{®} 220, Flexpur^{®} 240 or mixture thereof, commercially available.

In an embodiment, the polyurethane prepolymer used to obtain the cork powder binding gel of the present invention is the commercial product ^{®}Flexpur 220, which is a polyurethane prepolymer resulting from the reaction between polyols and toluene diisocyanate (TDI). It is presented as a transparent, colourless or slightly yellowish liquid with no suspended materials, with viscosity between 4000-8000 cP at 25 °C (NP ISO 2884 method, Brookfield equipment) and NCO content between 2.5 - 5.0 %.

In an embodiment, the polyurethane prepolymer used to obtain the cork powder binding gel of the present invention is the commercial product ^{®}Flexpur 240, which is a polyurethane prepolymer resulting from the reaction between polyols and toluene diisocyanate (TDI). It is presented as a transparent, colourless or slightly yellowish liquid with no suspended materials and with a low free TDI content, and with viscosity between 6000-10000 cP at 25 °C (NP ISO 2884 method, Brookfield equipment), NCO content between 2.5 - 3.5% and free TDI content <1.0 %.

In an embodiment, the post-foaming gel of the present invention is produced by mixing Flexpur^{®} 220/ Flexpur 240^{®} + water + surfactant agent.

In a preferred embodiment, the surfactant agent used must be capable of enhancing the production of a foam of very small, closed-cells (between 10 and 50 µm), so that they have a size similar to the honeycomb cells of natural cork. The microcellular foam cells (foam obtained from the post-foaming gel of the present invention) must resist pressure and temperature (120 °C) without disrupting, that is, they must have a resistance identical to the honeycomb cells of natural cork.

In a preferred embodiment, the surfactant agent is selected from silicone-based agents and their derivatives; polysiloxane and its derivatives; or mixtures thereof.

There are several surfactants commercially available based on silicone and polysiloxane and their derivatives that can be used in the present invention.

In a preferred embodiment, the surfactant is selected from the following list: Tegostab B 89120, Tegostab B 8905, Tegostab B 8946 PF, Tegostab B 8450, DABCO DC 193, Niax L-6900, Niax L-6891, Niax L-6887, Niax L-6884, Niax L-6886, Niax L-6988, Maysta AK-8804, Maysta AK-8842, Maysta AK-8843, Vorasurf DC 193, Vorasurf TF 1598, Vorasurf RF 5358, Silguard YK-1211, Silguard YK-1212, or mixtures thereof.

In an even more preferred embodiment, the surfactant agent is a modified polyether polysiloxane, such as those described in documents EP2554574B1, US8283422B2, US9657144B2, US8334355B2 and US8957009B2, and commercially available under the brand name Tegostab^{®} B 8905 and Tegostab^{®} B 8946 PF.

### Example 1A

In an embodiment, the cork powder binding gel of the present invention is obtained by mixing of:
80-99% (wt/wt_{gel}) of prepolymer from example A or prepolymer from example B, or a mixture thereof;
0.1-5% (wt/wt_{gel}) of at least one surfactant agent.

### Example 1B

In an embodiment, the cork powder binding gel of the present invention is obtained by mixing of:
80-99% (wt/wt_{gel}) of Flexpur^{®} 220 or Flexpur^{®} 240 prepolymer, or a mixture thereof;
0.1-5% (wt/wt_{gel}) of at least one surfactant agent.

### Example 1C

In an embodiment, the post-foaming gel of the present invention is obtained by mixing of:
70%-95% wt/wt of prepolymer from example A or prepolymer from example B, or a mixture thereof;
1%-20% wt/wt of water; and
0.1%-5% wt/wt of surfactant agent;
mixing all components, preferably with a mixer/disperser, more preferably with a "Cowles" type mixer, preferably at 500 rpm for 30 seconds.

### Example 1D

In an embodiment, the post-foaming gel of the present invention is obtained with 70%-95% wt/wt of Flexpur^{®} 220 or Flexpur^{®} 240, or a mixture thereof;
1%-20% wt/wt of water; and
0.1%-5% wt/wt of surfactant agent,
mixing all components, preferably with a mixer/disperser, more preferably with a "Cowles" type mixer, preferably at 500 rpm for 30 seconds.

### Example 2

In an embodiment, the expanded cork powder granules of the present invention are obtained from:
50%-90% wt/wt of cork powder; and
10%-50% wt/wt of the post-foaming gel,
placing the cork powder in a mixer/crusher, preferably of the "Cowles" type, stirring at 1000 rpm, and pouring the post-foaming gel over the cork powder under stirring; letting it stir for 1-15 minutes;
placing the mixture in a container to rest until the complete cure and obtention of an agglomerate of expanded cork powder granules;
after the curing time, breaking apart the agglomerate in a mixer/crusher, preferably of the "Cowles" type, obtaining expanded cork powder granules.

### Example 3

**Table 3** shows examples representing different compositions of the present invention **(Examples 3a - 3b)** and a comparison with the comparative examples **1-3.**

**Table 3. Examples 3a and 3b and comparative examples 1-3.**

| **Example** | **Composition of the post-foaming gel + cork powder** | **Moulding composition (stopper production)** |
|---|---|---|
| **Example 3a** | **Composition 3a**: | (70% wt/wt of microgranulated cork ³ + 30% wt/wt of composition **3a)** + 23% Wt/Wt(microgranulated cork + composition 3a) of Flexpur^{®} 240¹ |
| | 25% wt/wt of (94% wt/wt of Flexpur^{®} 220¹ + 1% wt/wt of Tegostab^{®} B 8905 ² + 5% wt/wt of H₂O) + 75% wt/wt of light cork powder | |
| **Example 3b** | **Composition 3b:** | (70% wt/wt of microgranulated cork ³ + 30% wt/wt of composition **3b)** + 23% Wt/Wt(microgranulated cork + composition 3b) of Flexpur^{®} 240 ¹ |
| | 25% wt/wt of (94% wt/wt of Flexpur^{®} 220¹ + 1% wt/wt of Tegostab^{®} B 8905 ² + 5% wt/wt of H₂O) + 75% wt/wt of dark cork powder | |
| **Comparative example 1** | N/A | (70% wt/wt of microgranulated cork ³ + 30% wt/wt of light cork powder) + 23% Wt/Wt(microgranulated cork + light cork powder) of Flexpur^{®} 240 ¹ |
| **Comparative example 2** | N/A | (70% wt/wt of microgranulated cork ³ + 30% wt/wt of dark cork powder) + 23% Wt/Wt(microgranulated cork + dark cork powder) of Flexpur^{®} 240 ¹ |
| **Comparative example 3** | N/A | 100% wt/wt of microgranulated cork ³ + 23% Wt/Wt(microgranulated cork) of Flexpur^{®} 240 ¹ |

| | | |
|---|---|---|
| ¹ Polyurethane prepolymer, ² Silicone surfactant agent to produce microcellular polyether foams. Microgranulated cork: in an embodiment, the microgranulated cork used is characterized by cork granules with dimensions between 0.5-1.0 mm. In the examples in this table, microgranulated cork has cork granules with dimensions between 0.5-1.0 mm and was purchased from Diam Bouchage. | | |

**Method of preparing the post-foaming gel:** in a mixer/crusher, preferably of the "cowles" type, at 500 rpm for 30 seconds, mixing the polyurethane prepolymer with the surfactant and the amount of water, according to the amounts in **Table 3.**

**Method of preparing the cork powder granule:** in a mixer/crusher, preferably of the "cowles" type, placing the cork powder and stirring at 1000 rpm, adding 25% wt/wt of the post-foaming gel and leaving it stirring for 4 minutes.

**Method of preparing the moulding composition:** In a mixer/crusher, preferably of the "cowles" type, stirring at 1000 rpm a mixture of 70% of microgranulated cork (granule size between 0.5-1.0 mm) + 30% of the expanded cork powder granule obtained, as described in the examples **3a** and **3b.** Adding to the stirring mixture 23% wt/wt_{(microgranulated cork + dark cork powder)} of polyurethane 1K, preferably Flexpur^{®} 240, and leaving it stirring for 7 minutes.

**Moulding method:** Placing in a cylindrical mould under pressure and at a temperature of 120 °C for 45 minutes the amount of mixture sufficient to obtain a cylinder with a diameter of 30 mm, a height of 50 mm and a density of 0.3 g/cm³, at 25 °C.

**Table 4** shows the results of stoppers produced by moulding, comparing the suitability of the expanded cork powder granules obtained according to the present invention (examples **3a** and **3b)** with the direct use of cork powder (comparative examples **1-3).**

**Table 5** shows the density results of the expanded cork powder granules obtained according to the present invention and of the cork powder.

**Table 4. Results of stoppers produced by moulding**

| **Composition** | **Assay** | | |
|---|---|---|---|
| | **Moment/Torsion (daN.cm)¹⁾** | **Angle/Torsion (°)²⁾** | **Absorption (%)³⁾** |
| **Example 3a** | 58.9 | 50.9 | 65.5 |
| **Example 3b** | 54.3 | 54.5 | 62.0 |
| **Comparative example 1** | 51.7 | 50.2 | 136.7 |
| **Comparative example 2** | 47.4 | 51 | 120.0 |
| **Comparative example 3** | 63.1 | 55.5 | 61.3 |

| | | | |
|---|---|---|---|
| ¹⁾Moment/Torsion was measured using NP 2803-6 ²⁾Angle/Torsion was measured using NP 2803-6 ³⁾Absorption was measured by immersing stoppers (without treatment) previously weighed (initial mass) in water at 50 °C for 3 days. After 3 days, stoppers are removed from the container and weighed again (final mass). Absorption % is calculated by: % of H₂O absorption = [(Final mass - Initial mass)/Initial Mass] *100 | | | |

**Table 5. Density of cork powder and expanded cork powder granules (at 25 °C).**

| **Sample** | **Density of the cork powder** | **Granulometry of the cork powder** | **Composition of the post-foaming gel + cork powder** | **Density of the expanded cork powder granules** | **Granulometry of the expanded cork powder granules obtained** |
|---|---|---|---|---|---|
| Crushing cork powder (black powder) | 370 g/dm³ | less than 0.25 mm | 25% wt/wt of (94% wt/wt of Flexpur^{®} 220 ¹ + 1% wt/wt of Tegostab^{®} 8905 + 5% wt/wt of H₂O) + 75% wt/wt of crushing cork powder | 250 g/dm³ | from 0.5 mm to 1.25 mm |
| Sanding cork powder (light brown powder) | 130 g/dm³ | less than 0.25 mm | 25% wt/wt of (94% wt/wt of Flexpur^{®} 220 ¹ + 1% wt/wt of Tegostab^{®} B 8905 + 5% wt/wt of H₂O) + 75% wt/wt of sanding cork powder | 100 g/dm³ | from 0.5 mm to 1.25 mm |

| | | | | | |
|---|---|---|---|---|---|
| ¹ Polyurethane prepolymer ² Surfactant agent | | | | | |

By analysing **Tables 4** and **5,** it can be seen that the use of expanded cork powder granules of the present invention allows the production of cork stoppers that have the same physical properties as stoppers that only comprise microgranulated cork (comparative example 3). Such an effect is obtained because the expanded cork powder granules of the present invention have an artificial honeycomb structure identical to natural cork. In cork powder, the honeycomb structure was destroyed and when producing stoppers agglomerated with cork powder, the compression rate will be lower and the liquid penetration rate into the stopper will be higher, because the cork powder has lost the barrier of closed honeycomb cells. According to Fortes, Manuel Amaral *et*. *al* (2004) in the book "A Cortiça", the size of cork alveoli ranges from 0.015 mm to 0.050 mm; therefore, considering that cork powder has a dimension of less than 0.25 mm, this implies that the amount of intact cork alveoli (which have not been broken by mechanical action) is very low, and for cork powder with a granulometry of less than 0.1 mm there are practically no intact alveoli. The alveoli being broken, the cellular structure is open and thus the barrier that prevents the penetration of liquid into the cork is lost. The method of obtaining the expanded cork powder granule of the present invention makes it possible to create a honeycomb structure similar to natural cork and to obtain a lower density. In this way, the use of the expanded granules of the present invention allows the stoppers obtained to present physical properties similar to stoppers agglomerated with microgranulated cork.

### Example 5

### Method of obtaining the expanded cork powder granule

In a mixer/crusher, preferably of the "Cowles" type, placing 75 g of cork powder and stirring (1000 rpm). Preparing 26.5 g of post-foaming gel (25 g of Flexpur^{®} 220 + 1.25 g of water + 0.25 g of Tegostab^{®} B 8905), pouring into the mixer/crusher with the cork powder under stirring. Allow to disperse for 4-5 minutes and then placing the mixture in a container and letting it rest at room temperature for 24 hours, in order to obtain an agglomerate of expanded cork powder granules. After 24 hours, breaking apart the agglomerate of expanded cork powder granules, using the "Cowles" type mixer/crusher at 200 rpm for 20 seconds.

### Stopper moulding/production:

In a mixer/crusher, preferably of the "Cowles" type, placing 70 g of microgranulated cork (granule size between 0.5-1.0 mm) and 30 g of the expanded cork powder granules obtained according to the present invention, and stirring at 1000 rpm; adding 5 g of H₂O and 23 g of a 1K polyurethane prepolymer system, preferably Flexpur^{®} 240, and leaving it stirring for 7-10 minutes. With the mixture obtained, preparing agglomerated stoppers with a density of 240-320 g/dm³; preferably 300 g/dm³.

### Example 6

### Microcellular foam/Cork powder composite (expanded granule comprising a plurality of cork powder particles bound by the polyurethane foam of the present invention):

In a mixer/crusher, preferably of the "Cowles" type, placing 75 g of cork powder and stirring (1000 rpm). Preparing 26.5 g of post-foaming gel (25 g of Flexpur^{®} 240 + 1.25 g of water + 0.25 g of Tegostab^{®} B 8905), pouring into the mixer/crusher with the cork powder under stirring. Allow to disperse for 4-5 minutes and then placing the mixture in a container and letting it rest at room temperature for 24 hours, in order to obtain an agglomerate of expanded cork powder granules. After 24 hours, breaking apart the agglomerate of cork powder expanded granules using the "Cowles" type mixer/crusher at 200 rpm for 20 seconds.

### Stopper moulding/production:

In a mixer/crusher, preferably of the "Cowles" type, placing 70 g of microgranulated cork (granule size between 0.5-1.0 mm) and 30 g of the expanded cork powder granules obtained according to the present invention and stirring at 1000 rpm. Adding 5 g of H₂O and 23 g of a 1K polyurethane prepolymer system, preferably Flexpur^{®} 240, and leaving it stirring for 7-10 minutes. With the mixture obtained, preparing agglomerated stoppers with a density ranging from 240-320 g/dm³; preferably 300 g/dm³.

The term "comprise" or "comprising" whenever used herein is intended to indicate the presence of stated features, elements, integers, steps and components, but not to preclude the presence or addition of one or more other features, elements, integers, steps and components, or groups thereof.

The present invention is, of course, in no way restricted to the embodiments described herein and a person with average knowledge in the art will be able to foresee many possibilities for modifying it and replacing technical characteristics with other equivalent ones, depending on the requirements of each situation, as defined in the appended claims.

The following claims define additional embodiments of the present description.

## Claims

1. Cork powder binding gel which comprises:
80-99% (wt/wt_{gel}) of at least one polyurethane prepolymer which comprises 0.5-10% (wt/wt_{gel}) of isocyanate groups and 0.05 - 5% (wt/wt_{gel}) of free isocyanate monomers;
0.1-5% (wt/wt_{gel}) of at least one surfactant agent for the production of microcellular foams;
wherein the surfactant agent is selected from a list consisting of: silicone; polysiloxane, or mixtures thereof.

2. Gel according to the previous claim comprising 0.5-2% (wt/wt) of at least one surfactant agent; preferably 0.5-1.5% (wt/wt).

3. Gel according to any one of the previous claims wherein the surfactant agent is selected from a list consisting of: polyethersiloxane, polyethersiloxane comprising alkoxysilyl groups, polysiloxane polyether, silicone-polyether copolymer, linear polydimethylsiloxane-polyether copolymer, modified polyether polysiloxane, or mixtures thereof.

4. Gel according to the previous claim wherein the surfactant agent is a modified polyether polysiloxane.

5. Gel according to claim 3 wherein the surfactant agent is a polyethersiloxane comprising alkoxysilyl groups.

6. Gel according to any one of the previous claims wherein the polyurethane prepolymer comprises 0.1 - 5% (wt/wt_{gel}) of free isocyanate monomers; preferably 0.1-1% (wt/wt_{gel}).

7. Gel according to any one of the previous claims wherein the polyurethane prepolymer comprises linear and branched polyether polyols of molar mass greater than 2000 g/mol; preferably with a molar mass ranging from 2000 - 10000 g/mol; more preferably ranging from 2000 - 5000 g/mol.

8. Gel according to any one of the previous claims wherein the polyurethane prepolymer comprises aromatic and/or aliphatic isocyanates; preferably toluene diisocyanate (TDI); more preferably 2,4-TDI and/or 2,6-TDI isomers.

9. Gel according to any one of the previous claims wherein the free isocyanate groups are linked to a toluene.

10. Polyurethane post-foaming gel comprising 80-99% (wt/wt_{gel}) of the gel according to any one of the previous claims and 1-20% (wt/wt_{gel}) of water.

11. Polyurethane post-foaming gel according to the previous claim wherein the gel time is at least 360 seconds.

12. Polyurethane post-foaming gel according to the previous claim wherein the gel time ranges from 360-720 seconds; preferably from 540 - 600 seconds.

13. Polyurethane post-foaming gel according to any one of the previous claims 10-12 wherein the viscosity ranges from 2000 - 10000 cP, at 25 °C.

14. Use of the gel as described in any one of the previous claims 1-9 or the polyurethane post-foaming gel as described in any one of the previous claims 10-13 as a cork powder binder.

15. Expanded cork powder granule comprising a plurality of cork powder particles bound by the polyurethane post-foaming gel as described in any one of the previous claims 10-13, wherein the granulometry of the cork powder particles is less than 250 µm.

16. Expanded cork powder granule comprising a plurality of cork powder particles bound by the polyurethane foam resulting from the polyurethane post-foaming gel as described in any one of the previous claims 10-13, wherein the granulometry of the cork powder particles is less than 250 µm.

17. Expanded granule according to any of the previous claims 15-16 wherein the density of the expanded granule is less than 0.5 g/cm³.

18. Expanded granule according to the previous claim wherein the density of the expanded granule ranges from 0.10 - 0.37 g/cm³; preferably from 0.10 - 0.25 g/cm³.

19. Expanded granule according to any one of the previous claims 15 - 18 wherein the size of the expanded granule is greater than 100 µm; preferably ranging from 300-600 µm.

20. Expanded granule according to any one of the previous claims 15 - 19 wherein the compressibility index of the expanded granule ranges from 1500-2500 N.

21. Composition comprising the expanded granule as described in any one of claims 15-20.

22. Article comprising the composition according to the previous claim or the expanded granule according to any one of claims 15-20.

23. Stopper comprising the expanded granule as described in any one of claims 15-20.

24. Stopper according to the previous claim comprising 10 to 50% (wt/wt) of the expanded granule as described in any one of claims 15-20; preferably 15 to 40% (wt/wt); more preferably 20 to 30% (wt/wt).

25. Method for producing the expanded granule as described in any one of claims 15-20 comprising the following steps:
obtaining cork powder, wherein the size of the cork powder particles has a granulometry of less than 250 µm;
mixing the cork powder with 5 to 50% (wtgel/wttotal) of the post-foaming gel as described in any one of the previous claims 10-13, until obtaining a homogeneous mixture; preferably at a temperature between 15-30 °C;
resting the homogeneous mixture from the previous step in order to obtain an agglomerate of expanded cork powder granules comprising a plurality of cork powder particles bound by the polyurethane foam;
breaking apart the agglomerate of expanded cork powder granules to obtain expanded cork powder granules.

26. Method according to the previous claim wherein the cork powder is selected from crushing powder, cleaning powder, granulometric separation powder, powder from the finishes of stoppers and agglomerate discs, powder from the finishes of natural cork stoppers, black cork powder, or mixtures thereof.

27. Method according to the previous claim wherein the cork powder is selected from powder from the finishes of stoppers or crushing powder, or mixtures thereof.

28. Method according to any one of the previous claims 25-27 wherein the step of breaking apart the agglomerate of expanded cork powder granules is carried out gently using a dispersing propeller or helical mixer; preferably at 200 rpm for 20 seconds.

29. Method for producing the article or stopper as described in any one of the previous claims 22-24, comprising the following steps:
obtaining crushed cork;
obtaining expanded cork powder granules, as described in any one of the previous claims 15-20;
mixing 50-60% (wt/wt) of crushed cork, 20-30% (wt/wt) of expanded cork powder granules and 15-25% (wt/wt) of a binding agent and 2-6% (wt/wt) of water, until obtaining a homogeneous mixture;
compressing the mixture from the previous step in order to obtain the article or stopper,
wherein the binding agent is a one-component polyurethane prepolymer system or a two-component polyurethane prepolymer system; preferably a one-component polyurethane prepolymer system.

30. Method according to the previous claim, wherein the crushed cork comprises a particle size of 0.5-7.0 mm; preferably 0.5-1.0 mm.

31. Method according to any one of the previous claims 29-30, wherein the stopper obtained comprises a density ranging from 240-320 g/dm³; preferably 300 g/dm³.

32. Method according to any one of the previous claims 29-31, wherein the binding agent is a one-component polyurethane prepolymer system comprising 0.5-10% (wt/wt) of isocyanate groups and 0.05 - 5% (wt/wt) of free isocyanate monomers.
